# EUROPÄISCHE PATENTSCHRIFT

(11) **EP 2 312 224 B1**
(45) Veröffentlichungstag und Bekanntmachung des Hinweises auf die Patenterteilung: **25.12.2019**
(21) Anmeldenummer: 10010486.8
(22) Anmeldetag: 24.09.2010
(51) Int. Cl.: F24D 3/18, F24D 19/08, F24H 1/12, F24H 9/14

(54) **Wärmepumpe mit einem Hydraulikmodul**
Heat pump with a hydraulic module
Pompe à chaleur dotée d'un module hydraulique

(30) Priorität: 07.10.2009 DE 102009048585
(43) Veröffentlichungstag der Anmeldung: 20.04.2011
(73) Patentinhaber: Stiebel Eltron GmbH & Co. KG, 37603 Holzminden (DE)
(72) Erfinder: Hüge, Carsten, 37287 Wehretal (DE)
(74) Vertreter: Eisenführ Speiser

(56) Entgegenhaltungen:
- EP-A2- 0 915 305
- DE-A1- 3 214 775
- DE-A1- 3 306 232
- DE-A1- 3 817 441
- DE-A1- 10 063 851
- DE-A1- 19 820 818
- DE-A1- 19 909 780
- FR-A1- 2 755 752
- GB-A- 769 230

## Beschreibung

Die Erfindung betrifft eine Wärmepumpe mit einem Hydraulikmodul.

Bekannt ist aus DE 32 14 775 A1 eine Vorrichtung zum Übergeben von Wärme von einer Versorgungsleitung zu einem Abnehmer. Die Vorrichtung weist in Form einer Matrix angeordnete, sich zumindest teilweise schneidende Längs- und Querleitungen auf.

Eine Baueinheit einer Heizungsanlage mit zwei Heizkreisen ist aus EP 1 884 723 B1 bekannt. Die Baueinheit besteht mindestens aus einem Kunststoffgehäuse-Bauteil mit einem Pumpenaggregat, mit einem Wärmetauscher für die Brauchwassererwärmung und mit weiteren elektrischen, mechanischen oder hydraulischen Komponenten, wobei die Baueinheit vier Gehäuseteile aufweist.

Aus EP 1 447 627 B1 ist eine Vorrichtung zum Steuern und/oder Regeln für die Gebäudeheizung oder -kühlung mit einem Gehäuse bekannt. An der Außenseite des Gehäuses ist eine Mehrzahl von Anschlüssen für die Zu- und Ableitung von energietransportierenden Medien vorgesehen. Es handelt sich hierbei um eine Verteileinheit als vormontierte Baueinheit in einem Gehäuse. Das Gehäuse verfügt über ein erstes und zweites Gehäusesegment, wobei in dem ersten Gehäusesegment die hydraulischen Mittel zum Verteilen des durch Sonnenkollektoren erwärmten energietransportierenden Mediums angeordnet sind.

Eine Baueinheit für eine Kompaktheizungsanlage mit rückwärtigen Anschlüssen für einen Plattenwärmetauscher mit einem zentralen Pumpengehäuse ist aus EP 1 528 330 B1 bekannt. Hierbei sind im Armaturengehäuse jeweils von vorn zugängliche Einschubräume zur Aufnahme mindestens einer Armatur vorgesehen.

Eine Vorrichtung gemäß DE 20 2008 003 241 U1, die für ein Wärmemanagementsystem eines Raumes vorgesehen ist, ist mit Anschlüssen für wenigstens einen ersten, einen zweiten sowie einen dritten Kreislauf ausgestattet. In den Kreisläufen zirkuliert ein thermisch beanspruchbares Fluid, und die Vorrichtung ist als mechanisch abgeschlossene, einzeln handhabbare Baueinheit ausgebildet. Wenigstens ein Teil weist miteinander strömungstechnisch verschaltete Verbindungsleitungen auf. Die Druckschrift GB 769 230 A offenbart eine Wärmepumpe mit einem Hydraulikmodul, sowie einem Kältemittelkreislauf mit einem Verdichter, einem Verflüssiger, einem Verdampfer und einem Expansionsventil, wobei das Hydraulikmodul ein Gehäuse mit wenigstens einem Vorlaufanschluss und wenigstens einem ersten Rücklaufanschluss, durch das ein Fluid leitbar ist und einen Heizkörper aufweist; wobei das Gehäuse zur Fluidführung aus wenigstens einer ersten Wand und einer zweiten Wand gebildet ist, wobei die erste mit der zweiten Wand eine dauerhaft wasser- und druckdichte Kavität zur Aufnahme des Heizkörpers bildet, und wobei eine fluidleitende Verbindung der Kavität mit dem Vorlaufanschluss und dem ersten Rücklaufanschluss besteht.

Aufgabe der Erfindung ist es, eine Wärmepumpe mit einem Hydraulikmodul bereitzustellen und so auszustatten, dass sie flexibel als kompaktes Bauteil unabhängig vom vorliegenden kombinierten Brauchwasser- und Heizungssystem einbaubar ist.

Gelöst ist die Aufgabe durch die Merkmale des Patentanspruchs 1.

Das Hydraulikmodul ist aus einem Gehäuse mit wenigstens einer ersten und einer zweiten Wand gebildet, die jeweils spritzgegossen sind. Die erste und die zweite Wand bestehen aus Kunststoff und werden miteinander verbunden, insbesondere mit einem Schweißverfahren, wie Vibrationsschweißen, Ultraschallschweißen, Reibschweißen oder auch Laserschweißen. Somit ergibt sich durch die dauerhafte wasser- und druckdichte Verbindung der ersten mit der zweiten Wand eine Fluidführung mit wenigstens einer Kavität zur Aufnahme eines Bauteils, welches im Fluidstrom liegt. Die Wasserführung ist in der ersten und zweiten Wand für einen geringen internen Druckverlust optimiert. In der wenigstens einen Kavität ist in einem vorteilhaften Ausführungsbeispiel eine elektrische Zusatzbeheizung eingebaut. Dies ist insbesondere vorteilhaft bei einem Einsatz des Hydraulikmoduls in einer Wärmepumpe. Die Zusatzheizung wird z.B. für den Fall erhöhter Vorlauftemperatur oder zur Unterstützung einer Luft/Wasser-Wärmepumpe bei sehr kalten Außentemperaturen benutzt.

Das Hydraulikmodul ist für einen Volumenstrom von insbesondere 1 - 40 m³/h ausgelegt, insbesondere 1,5 - 4 m³/h und speziell ca. 2 - 2,5 m³/h. Hierfür sind vorteilhafterweise Strömungsquerschnitte eines Leitungszulaufs und/oder eines Leitungsablaufs vorgesehen, die einem Rohr mit einem Durchmesser von ca. 1 - 8 cm entsprechen.

Die Grundwandstärke des Hydraulikmoduls beträgt ca. 2 - 3,5 mm, insbesondere ca. 2,8 mm. Die Rippen können auch eine geringere Wandstärke aufweisen, insbesondere 1,5 mm. Mit der Grundwandstärke sind insbesondere die Wände der Kavität ausgestattet. So ist ein vorteilhafter Betriebsdruck von 1 - 5 bar möglich, insbesondere 3 bar. Das Sicherheitsventil ist im Ausführungsbeispiel auf 3 bar ausgelegt, es sind aber auch andere Drücke zwischen 0 und 10 bar möglich.

Weiterhin ist ein Leitungszulauf mit dem Vorlaufanschluss, und ein Leitungsablauf mit wenigstens einem ersten Rücklaufanschluss zur Leitung eines Fluids verbunden.

Bezüglich der Druckverluste ist es besonders vorteilhaft, wenn die Durchströmung des Hydraulikmoduls durch möglichst wenig Umlenkung erfolgt. Daher ist es von Vorteil, wenn der Vorlaufanschluss, der Leitungszulauf, die Kavität, der Leitungsablauf und der Rücklaufanschluss ohne oder mit möglichst wenigen Umlenkungen ausgestaltet sind. Dies ist allerdings aufgrund der Bauweise eines Haustechnikgerätes, in das das Hydraulikmodul eingesetzt wird, nicht immer möglich.

Vorteilhaft ist es daher, wenn Leitungszulauf und/oder Leitungsablauf wenigstens eine Strömungsumkehr aufweisen und in der Nähe, insbesondere nahezu parallel oder in einem Winkel zur Kavität angeordnet sind.

Der Vorlaufanschluss und/oder der Rücklaufanschluss ist in vorteilhafter Weise ohne eine Umlenkung mit dem Leitungszulauf und/oder dem Leitungsablauf verbunden.

In einem anderen Ausführungsbeispiel sind der Vorlaufanschluss und/oder der Rücklaufanschluss in einem Winkel zum Leitungszulauf und/oder zum jeweiligen Leitungsablauf angeordnet. Hiermit ist es möglich, insbesondere waagerecht zulaufende Vorlaufleitungen und/oder Rücklaufleitungen der Wärmepumpe mit dem Hydraulikmodul zu verbinden. Diese zur Wärmepumpe gehörenden Vorlauf- und/oder Rücklaufleitungen brauchen somit nicht extra abgewinkelt und in das Hydraulikmodul eingeführt zu werden. Alternativ kann die Wärmepumpe einen flexiblen Schlauch aufweisen, insbesondere als Vorlauf- und/oder Rücklaufleitung.

Bei einem vorteilhaften Hydraulikmodul ist ein Vorlaufanschluss rechtwinklig zu einem Leitungszulauf angeordnet. Dieser Leitungszulauf weist in Fluidrichtung weiterhin eine in etwa rechtwinklige Ablenkung auf, die mit einem Radius insbesondere von ca. 1 - 8 cm versehen ist. In Ergänzung oder alternativ hierzu ist der Rücklaufanschluss längs zum Leitungsablauf angeordnet, wobei der Leitungsablauf in vorteilhafter Weise wenigstens eine weitere Abwinklung aufweist. Der Leitungszulauf und der Leitungsablauf sind vorteilhafterweise seitlich an die Kavität, in der der Zusatzheizkörper liegt, angeschlossen. Strömungstechnisch günstiger ist es allerdings, wenn die Kavität weitgehend ohne Abwinklung ist und ohne Umlenkung des Fluids durchströmt wird. Der Zusatzheizkörper besteht vorteilhaft aus wenigstens einem Rohrheizkörper, Plattenheizkörper oder einem anderen elektrischen Heizkörper mit einer Heizleistung von vorteilhaft 1 - 20 kW, insbesondere ca. 3 - 12 kW.

Vorteilhaft ist es, wenn der Vorlaufanschluss und/oder der Rücklaufanschluss in der ersten und/oder der zweiten Wand angeordnet sind und der Leitungszulauf von einer ersten und einer dritten Leitungswand, und/oder von einer zweiten und einer vierten Leitungswand gebildet sind.

Gemäß einem weiteren Gedanken der Erfindung ist in der fluidleitenden Verbindung zwischen dem Vorlaufanschluss und wenigstens dem ersten Rücklaufanschluss wenigstens ein weiteres Bauteil angeordnet, insbesondere eine Aufnahme, ein Flansch, ein Führungsrohr, ein Drainageflansch, eine Sensoraufnahme und/oder ein zweiter Rücklaufanschluss.

Die Aufnahme ist hierbei insbesondere als rohrförmige Kavität vorgesehen, die in fluidführender Verbindung mit dem Leitungszulauf, dem Leitungsablauf, dem Vorlaufanschluss, dem Rücklaufanschluss und/oder der Kavität steht. Die Aufnahme dient, wie das Wort schon sagt, der Aufnahme von weiteren Komponenten, wie z.B. Sensoren, Fühlern, Aktoren wie Ventile oder z.B. einem Automatikentlüfter oder einfach einem Schauglas. Diese Komponenten können in die Aufnahme bzw. in eine der Aufnahmen eingesetzt werden. Sie werden hierbei in vorteilhafter Weise mit einem kleinen Bügel befestigt. Vorteilhaft ist weiterhin, wenn der Bügel für alle Aufnahmen der gleiche ist.

Vorteilhaft ist in einer Sensoraufnahme ein Durchflussensor eingesetzt, zur Messung des Fluid-Durchflusses durch das Hydraulikmodul.

Eine vorteilhafte Aufnahme ist durch ein Führungsrohr gebildet, welches insbesondere für einen Temperatursensor, einen Sicherheitstemperaturbegrenzer (STB) oder auch einen anderen Sensor oder Aktoren vorgesehen ist. Der Temperatursensor wird in das Führungsrohr eingeschoben, bis er im fluidführenden Bereich positioniert ist. Die Adaptierung erfolgt in vorteilhafter Weise ebenfalls mit einem Befestigungsbügel, wie er für alle Aufnahmen vorteilhaft gleichförmig ausgebildet ist. Die Betriebstemperatur, die für das Hydraulikmodul ausgelegt ist, beträgt ca. 60 - 100 °C, insbesondere ca. 75 °C. Die Abschalttemperatur des STB beträgt ca. 85 °C.

Der Flansch ist dafür vorgesehen, ein Sicherheitsventil aufzunehmen. Er ist vorteilhaft rohrförmig in der ersten oder zweiten Wand des Hydraulikmoduls gebildet. In diese Aufnahme wird z. B. ein handelsübliches Sicherheitsventil eingesteckt. Vorteilhaft ist es, wenn an dem Flansch eine Ablassöffnung für Fluid jeglicher Art vorgesehen ist, das im Sicherheitsfall vom Sicherheitsventil freigegeben wird.

Der Drainageflansch ist insbesondere dann erforderlich, wenn das Hydraulikmodul im fluidführenden Bereich Abwinklungen von mehr als 90° aufweist, so dass Räume entstehen, in denen sich schwerere Bestandteile als Wasser absetzen können. Daher ist es vorteilhaft, einen Drainageflansch im Hydraulikmodul vorzusehen, der zum Ablassen der Bestandteile geöffnet wird.

Gemäß einem weiteren Gedanken der Erfindung ist der Heizflansch mit einem Befestigungsring an der ersten und/oder der zweiten Wand wasserdicht befestigt.

In dem Fall, wenn das Fluid im Hydraulikmodul umgelenkt wird, insbesondere die Strömungsrichtung von oben nach unten durch das Hydraulikmodul wechselt, ist es von Vorteil, wenn das Hydraulikmodul eine Schwimmerkammer für einen Automatikentlüfter aufweist, wobei die Schwimmerkammer vorteilhaft eine höchste Stelle aufweist, die dafür vorgesehen ist, oben im Gerät zu liegen, wenn das Gerät senkrecht montiert ist. Bilden sich in einer Umlenkung für das Fluid Gasblasen, verlassen diese über den Automatikentlüfter das Hydraulikmodul.

Vorteilhafte Materialien für die erste Wand und/oder die zweite Wand ist Kunststoff, insbesondere PA66, SPS-GF30, PPE/PS-GF30, PA6T/6I-GF40 oder PEI-GF30. Gemäß einem weiteren Gedanken der Erfindung weist die erste und/oder die zweite Wand äußere Verstärkungen auf, insbesondere teilweise hohe Rippen. Auf einer ersten Außenwand und/oder einer zweiten Außenwand laufen mehrere Rippen, insbesondere sechs Rippen, auf einen Rippenring zu. Andere Rippen, insbesondere weniger als sechs Rippen, laufen in einem Rippenknoten zusammen.

Gemäß einem vorteilhaften Ausführungsbeispiel variieren die Rippen in der einen Höhe, insbesondere von ca. 1 - 40 mm, wobei sie eine Materialdicke von ca. 0,3 - 5 mm, insbesondere ca. 1 mm aufweisen.

Vorteilhaft ist es weiterhin, dass die erste und die zweite Wand miteinander verschweißt sind durch Vibrationsschweißen, Reibschweißen, Ultraschallschweißen oder Laserschweißen in einer Schweißfläche.

Mit dem 3/2-Wegeventil wird die Wärmenutzungsseite der Wärmepumpe, zwischen Heizungsbetrieb und Warmwasserbereitung umgeschaltet. Daher weist das Hydraulikmodul den ersten Rücklaufanschluss und den zweiten Rücklaufanschluss auf. Hier werden jeweils die Rücklaufleitungen von der Heizung und der Warmwasseranlage angeschlossen. Mit dem 3/2-Wegeventil wird nun zwischen dem Heizungsanschluss und dem Warmwasseranschluss umgeschaltet. Der Vorlaufanschluss führt in vorteilhafter Weise das Fluid aus der Heizung und/oder der Warmwasseranlage zu einem Wärmetauscher der Wärmepumpe. Dort wird das Wasser erwärmt und fließt dann wieder in die Heizung oder die Warmwasserbereitung.

Gemäß einem alternativen Gedanken der Erfindung können auch mehrere Vorlaufanschlüsse und insbesondere ein Rücklaufanschluss vorgesehen sein. Dann fließt das Wärmeträgerfluid erst durch einen Wärmetauscher der Wärmepumpe wird dort erwärmt und dann erfolgt mit dem 3/2-Wegeventil die Verteilung zum Heizsystem oder zur Warmwasserbereitung.

Das Hydraulikmodul ist in die Wärmepumpe eingebaut, insbesondere wie oben beschrieben mit einem 3/2-Wegeventil.

Der Vorlaufanschluss des Hydraulikmoduls ist in einem anderen vorteilhaften Fall mit einem Verflüssigerwärmetauscher der Wärmepumpe verbunden, die beiden Rücklaufanschlüsse (Heizung und Warmwasser) sind dann die jeweiligen Vorlaufanschlüsse für Heizkreis und Warmwasser-Speicherladekreis.

Gemäß einem weiteren Gedanken der Wärmepumpe sind die wesentlichen Komponenten der Wasserführung in dem Hydraulikmodul integriert und bilden eine Einheit.

Die Vorlaufleitung oder eine Leitung, die mit dem Wärmetauscher der Wärmepumpe verbunden ist, ist in einem vorteilhaften Ausführungsbeispiel in den Vorlaufanschluss des Hydraulikmoduls eingesteckt und/oder die Rücklaufleitung ist in den Rücklaufanschluss eingesteckt. Insbesondere ist mittels eines Dichtkörpers, wie einem O-Ring, zwischen der Leitung und dem Vorlaufanschluss und/oder dem Rücklaufanschluss eine wasserdichte Abdichtung vorhanden.

Gemäß einem vorteilhaften Gedanken der Erfindung sind der Rücklaufanschluss und der Vorlaufanschluss auf einer Seite des Hydraulikmoduls oder in einer Richtung angeordnet. In einer entsprechenden Wärmepumpe, in die das Hydraulikmodul eingebaut ist, sind die zum Rücklauf- und zum Vorlaufanschluss korrespondierenden Vorlaufleitungen und wenigstens eine

Rücklaufleitung ebenfalls auf einer Seite bzw. in einer Richtung angeordnet, so dass das Hydraulikmodul in einem Arbeitsgang auf die Wärmepumpe bzw. auf den Vorlauf und den wenigstens einen Rücklauf der Wärmepumpe aufgeschoben wird. Damit ist das Hydraulikmodul auch gleichzeitig in der Wärmepumpe arretiert. Eine vorteilhafte Ausgestaltung des Hydraulikmoduls ist hierbei die Anordnung des Leitungsablaufs und des Leitungszulaufs im Bereich der Kavität, wodurch das Modul weitgehend kompakt ist, allerdings eine oder mehrere Ablenkungen in Strömungsrichtung vorgesehen sind. Es ist aber auch ein Hydraulikmodul mit einer geringen oder mit gar keiner Ablenkung im Strömungsschluss verwendbar.

In vorteilhafter Weise wird das Hydraulikmodul über ein Loch in einer Lasche mit der Wärmepumpe verbunden. Im oben beschriebenen Fall reicht es aber aus, das Hydraulikmodul mit der Vorlauf- und Rücklaufleitung der Wärmepumpe zu verbinden. Hierzu weist vorteilhaft wenigstens die Vorlauf- und/oder Rücklaufleitung einen ringförmigen Absatz auf, hinter den ein Befestigungsbügel greift, um das Hydraulikmodul mit der Wärmepumpe zu sichern.

Gemäß einem weiteren Erfindungsgedanken ist ein Ende der Vorlaufleitung und ein Ende der Rücklaufleitung der Wärmepumpe gegenüberliegend angeordnet, so dass das Hydraulikmodul zwischen dem Ende der Vorlaufleitung und dem Ende der Rücklaufleitung angeordnet wird. Hierbei ist insbesondere eine Ausführung des Hydraulikmoduls mit wenigen inneren Umlenkungen in der Strömungszuführung von Vorteil. Im Fluidfluss, ausgehend vom Ende des Rücklaufanschlusses, fließt das Fluid dann weitgehend geradlinig durch das Hydraulikmodul, um dann am Ende der Vorlaufleitung wieder in die Wärmepumpe einzutreten.

Die Wärmepumpe weist eine Rücklaufleitung für das Heizungsfluid und eine Rücklaufleitung für das Warmwasserfluid auf, die beide an das Hydraulikmodul angeschlossen sind, an den ersten Rücklaufanschluss und den zweiten Rücklaufanschluss. Alternativ können auch zwei Vorlaufanschlüsse genommen werden.

Ein Regler der Wärmepumpe ist mit wenigstens einem in das Hydraulikmodul eingeschobenen oder damit in Kontakt stehenden Temperaturfühler und weiterhin mit dem Durchflusssensor verbunden. Der Heizkörper und das 3/2-Wegeventil sind ebenfalls mit der Regelung verbunden und werden insbesondere von der Regelung angesteuert oder geregelt.

Die Figuren zeigen
- Figur 1: ein Hydraulikmodul mit einem Heizflansch,
- Figur 2: das Hydraulikmodul mit einer ersten Wand,
- Figur 3: das Hydraulikmodul mit einer zweiten Wand,
- Figur 4a: eine Ansicht des Hydraulikmoduls, insbesondere auf dem Heizflansch,
- Figur 4b: einen Schnitt durch die Kavität,
- Figur 5: eine Seitenansicht des Hydraulikmoduls auf dem Flansch für das Sicherheitsventil,

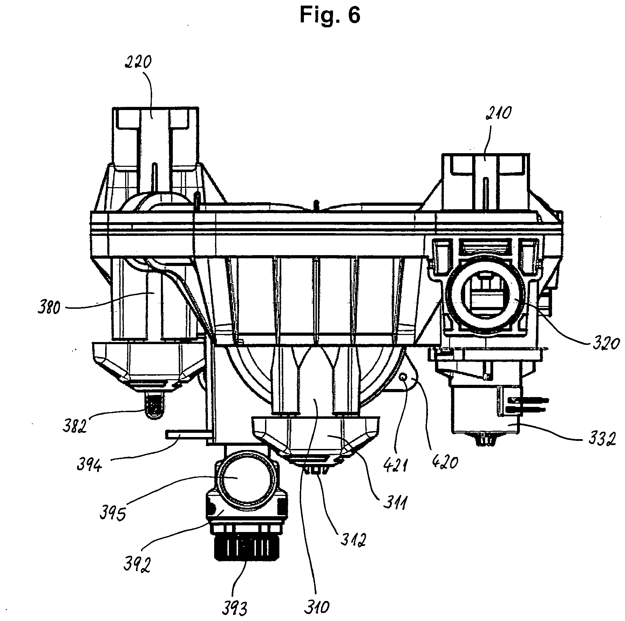

- Figur 6: eine Ansicht von unten auf das Hydraulikmodul,
- Figur 7: eine teilweise Schnittdarstellung durch das Hydraulikmodul mit Sicht in die Kavität,
- Figur 8: den Heizflansch,
- Figur 9: einen Schnitt durch den Heizflansch,
- Figur 10: den Schweißflansch,
- Figur 11: den Stopfen,
- Figur 12: Vorlaufanschluss/Rücklaufanschluss,
- Figur 13: die Wärmepumpe mit Hydraulikmodul.

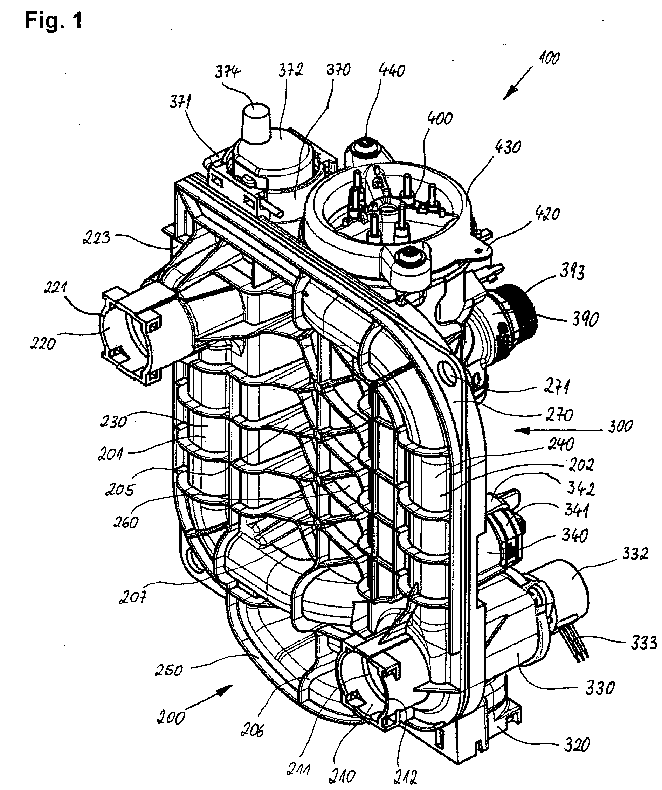

Fig. 1 zeigt ein Hydraulikmodul 100 mit einem Vorlaufanschluss 220, einem ersten Rücklaufanschluss 210 und einem alternativen zweiten Rücklaufanschluss 320. Der erste Rücklaufanschluss 210 weist einen Anschlag 211 auf sowie eine erste Anschlusskontur 212. Weiterhin ist ein 3/2-Wegeventil vorgesehen. Das Hydraulikmodul besteht aus einer ersten Wand 200 und einer zweiten Wand 300. Die erste Wand 200 weist eine erste Leitungswand 201 eines Leitungszulaufs 230 auf, sowie eine zweite Leitungswand 202 eines Leitungsablaufs 240. Die erste Leitungswand 201 weist eine Abwinklung mit einem Radius auf, wobei die Abwinklung in etwa rechtwinklig ausgeführt ist. Der Leitungszulauf 230 führt zu einer Kavität 160. Von der Kavität 160 führt der Leitungsablauf 240 zum ersten Rücklaufanschluss 210 und zum zweiten Rücklaufanschluss 320. Die Kavität 160 weist eine erste Außenwand 260 auf. Der Vorlaufanschluss 220 sowie der erste Rücklaufanschluss 210 und der zweite Rücklaufanschluss 320 sind jeweils mit einer Aussenkontur 221 für ein Sicherungselement, z.B. einen Sicherungsdraht ausgestaltet. Am Vorlaufanschluss 220 ist eine Grundfläche 223 vorgesehen, auf dieser steht sozusagen der Vorlaufanschluss 220, der einstückig in das Hydraulikmodul eingebunden ist. In Fig. 1 sind an der ersten Wand 200 verschiedene Rippen angebracht, beispielsweise ist eine Rippe 205, eine Längsrippe 209 und weitere Rippen vorhanden. Diese Rippen haben gemeinsam, dass sie zur Stärkung und Versteifung des Hydraulikmoduls beitragen. In einem Rippenring 207 laufen im Ausführungsbeispiel insgesamt sechs Rippen zusammen. Weiterhin weist das Hydraulikmodul einen ersten Steg 250 für einen Schweißflansch auf. Zur Befestigung des Hydraulikmoduls 100 z.B. an einem Haustechnikgerät ist eine Lasche 270 mit einer Befestigungsbohrung 271 vorgesehen.

An einer Sensoraufnahme 340 ist ein Volumenstromsensor 341 mit einer Klammer 342 gehalten. In einer Aufnahme 330 für einen Ventilantrieb ist ein Stellmotor 332 mit Anschlussleitungen 333 angebracht. Der Ventilantrieb bzw. der Stellmotor 332 öffnet den Durchfluss entweder durch den ersten Rücklaufanschluss 210 oder den zweiten Rücklaufanschluss 320. Ein Flansch 390 mit einem Rohrstück 391 ist für ein Sicherheitsventil 392 mit einem Drehknopf 393 vorgesehen.

In die Kavität 160 ist ein Heizflansch 400 eingebracht. Dieser Heizflansch 400 ist mit einem Befestigungsring 430 am Hydraulikmodul mittels Befestigungsschrauben 440 befestigt. Zur elektrischen Sicherheit ist an den Heizflansch 400 eine Schutzleiterlasche 420 mit einer Bohrung 421 angebracht.

Ebenfalls in das Hydraulikmodul 100 integriert ist eine Aufnahme 370 für einen Automatikentlüfter 372. Der Automatikentlüfter 372 ist mittels einer Sicherungsklemme 371 mit dem Hydraulikmodul 100 verbunden und mit diesem gesichert. Der Automatikentlüfter weist einen Schraubdeckel 374 auf.

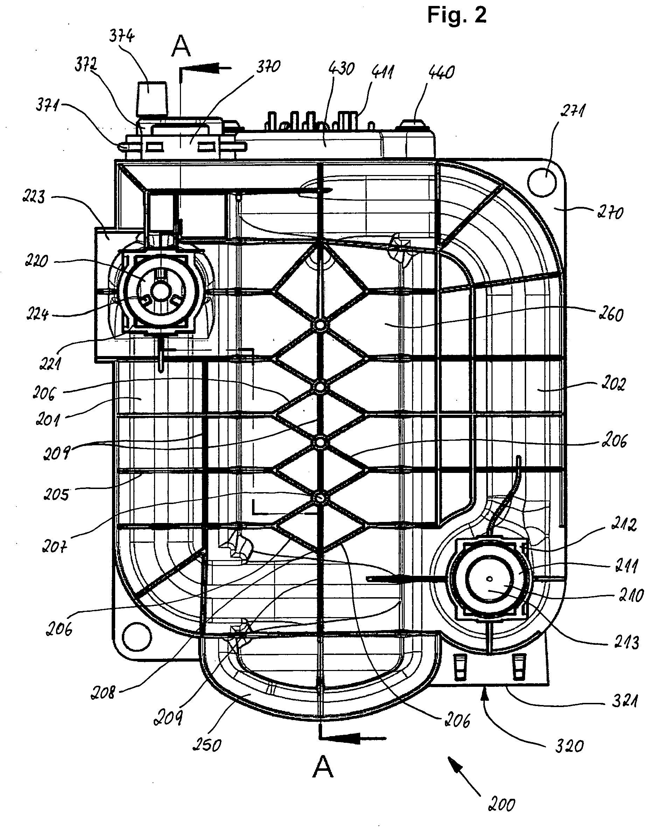

Die in Fig. 2 dargestellte erste Wand 200 ist mit Versteifungsrippen 206 ausgestaltet, von denen teilweise vier Versteifungsrippen und zwei Längsrippen 209 auf einen Rippenring 207 zulaufen und mit diesem verbunden sind. Der Rippenring 207 dient zur Aufnahme von Kräften, die aus den Versteifungsrippen 206 und den Längsrippen 209 auf den Rippenring wirken. Mit dem Rippenring 207 werden insbesondere Spannungen abgebaut. Insbesondere wenn weniger als sechs Rippen, z. B. vier Rippen auf einen Punkt zulaufen und damit verbunden sind, ist dort ein Rippenknoten 208 vorgesehen. Der Vorlaufanschluss 22 0 weist eine Auskernung 224 zur Vermeidung einer Materialanhäufung im Kunststoffteil auf. Im ersten Rücklaufanschluss 210 ist ein Dichtkegel 213 eines 3/2-Wegeventils zu sehen. Der zweite Rücklaufanschluss 320 weist eine zweite Anschlusskontur 321 auf. Hochstehend im Bereich des Heizflansches 400 sind die Anschlussspaten 411 des Heizflansches 400 angebracht.

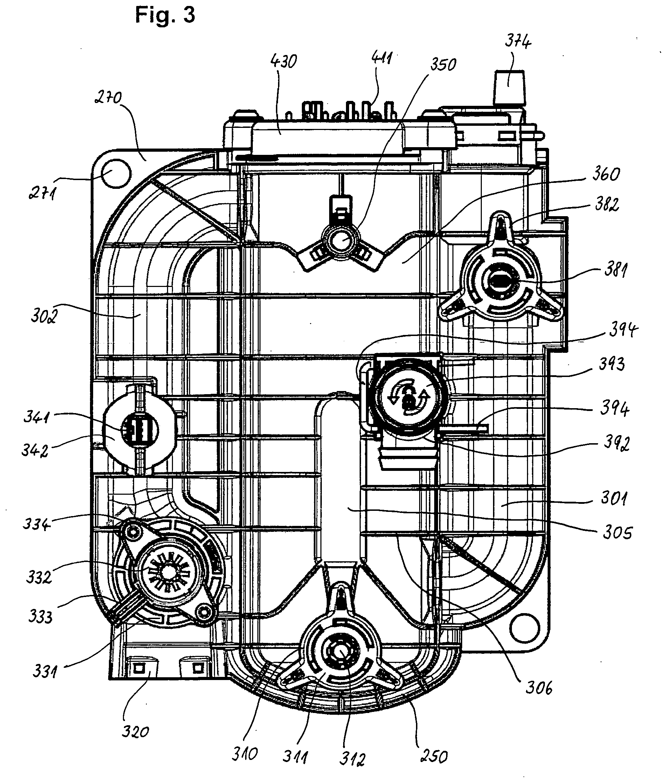

Die in Fig. 3 insbesondere dargestellte zweite Wand zeigt die Integration verschiedener Bauteile. Unten befindet sich ein Drainageflansch 310, der mit einer zweiten 1/4-Drehmutter 311, mit der ein Dichtstopfen 312 im Drainageflansch 310 befestigt ist, aufweist. Unterhalb des Drainageflansches befindet sich der erste Steg 250 des Schweißflansches. Auch die zweite Wand 300 weist verschiedene Versteifungsrippen 306 und weitere, wie in der Figur gezeigt, auf. Weiterhin ist ein Spiegel 305 vorgesehen, auf den die Artikelkennzeichnung sowie Seriennummer und dergleichen als Aufkleber, Aufdruck oder Prägung aufgebracht werden können. Die zweite Wand 300 bildet eine dritte Leitungswand 301 des Leitungszulaufs 230 sowie eine vierte Leitungswand für den Leitungsablauf 240. In der zweiten Wand 300 ist eine zweite Außenwand 360 der Kavität 160 ausgebildet. Im Ausführungsbeispiel ist in der zweiten Außenwand 360 ein Anschluss 350 für eine zusätzliche Messtechnik vorgesehen. Dieser Anschluss wird, wenn er nicht für zusätzliche Messtechnik verwendet wird, ebenfalls mit einem Dichtstopfen 312 verschlossen, der mit einer 1/4-Drehmutter 311 befestigt ist. Alternativ ist dieser Anschluss dauerhaft durch Verspritzen mit Kunststoffmaterial verschlossen.

Der Stellmotor 332 mit seinen Anschlussleitungen 333 ist mittels Stellmotorschrauben 334 am Hydraulikmodul 100 befestigt. Der Ventilantrieb 330 ist insbesondere an einem Ventilsitz 331 befestigt. Das Führungsrohr 380 für einen Temperaturfühler ist im Ausführungsbeispiel mit einem Stopfen 381, der mit einer ersten 1/4-Drehmutter 382 befestigt ist, wasserdicht verschlossen. Das Sicherheitsventil 392 ist mit einem Sicherungsbügel 394 im Flansch 390 gehalten.

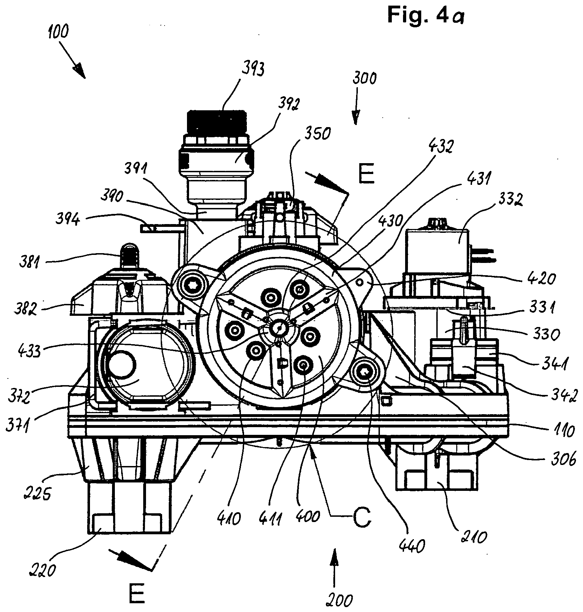

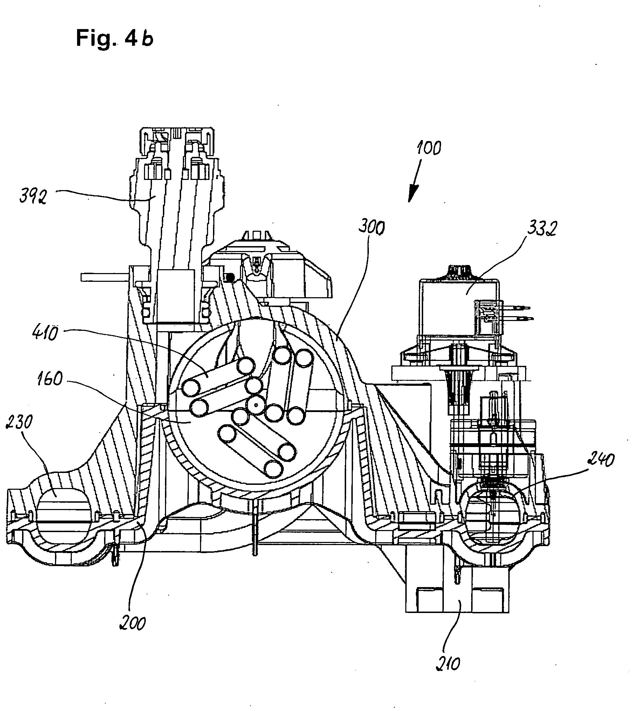

Das in Fig. 4a gezeigte Hydraulikmodul zeigt den Heizflansch 400 mit mehreren Rohrheizkörpern 410. Diese sind mit entsprechenden Anschlussspaten 411 in Form einer Flachsteckhülse oder einer Schrauböse oder einer anderen Befestigung für elektrische Anschlüsse gezeigt. Der Befestigungsring 430 zur Befestigung des Heizflansches 400 im Hydraulikmodul 100 weist drei Streben 431 auf, die auf einen Ring 433 in der Mitte des Befestigungsrings 430 zulaufen. Der Ring 433 weist ein Ringloch 432 für eine Fühlerbirne, z.B. einen Temperaturfühler oder Sicherheitstemperaturbegrenzer, auf. Die nicht dargestellte Fühlerbirne wird durch den Ring 433 in ein Schutzrohr 436 geschoben, das sich hinter dem Ringloch 432 befindet.

Das Hydraulikmodul 100 weist weitere Versteifungen 225 auf, die z.B. den Vorlaufanschluss 220 und andere Anschlüsse stützen. Die erste Wand 200 und die zweite Wand 300 weisen eine gemeinsame Schweißfläche 110 bzw. einen sogenannten Schweißflansch auf. Der Flansch 390 ist mit einem Rohrstück 391 für das Sicherheitsventil 392 versehen. Das Rohrstück 391 ist im Ausführungsbeispiel eine einstöckige Verlängerung des Flansches 390.

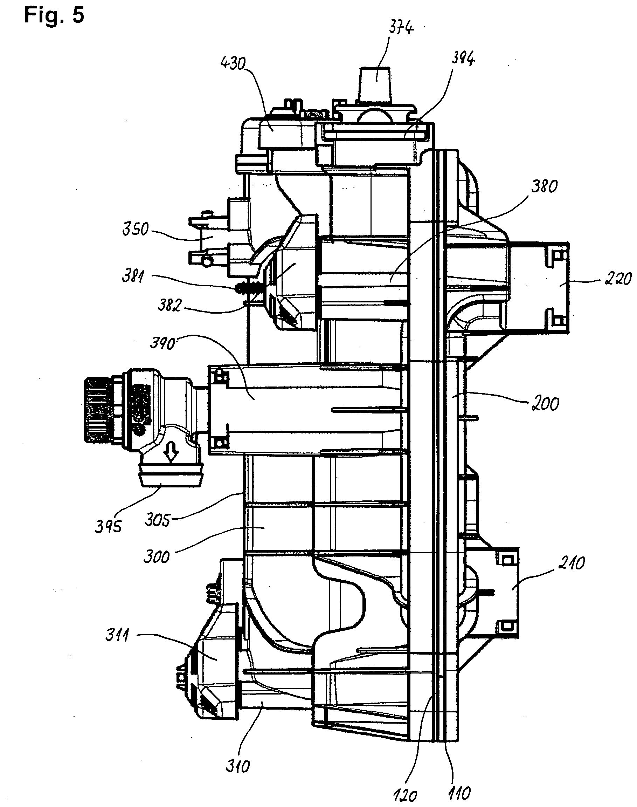

In Fig. 5 weist der Flansch 390 für das Sicherheitsventil 392 eine Ablassöffnung 395 auf. Die erste Wand 200 und die zweite Wand 300 sind an der Schweißfläche 110 zusammengefügt, und eine Kante 120 der Formtrennung ist zu sehen. Die Schutzleiterlasche 420 weist eine Bohrung 421 zur Befestigung eines Schutzleiters auf.

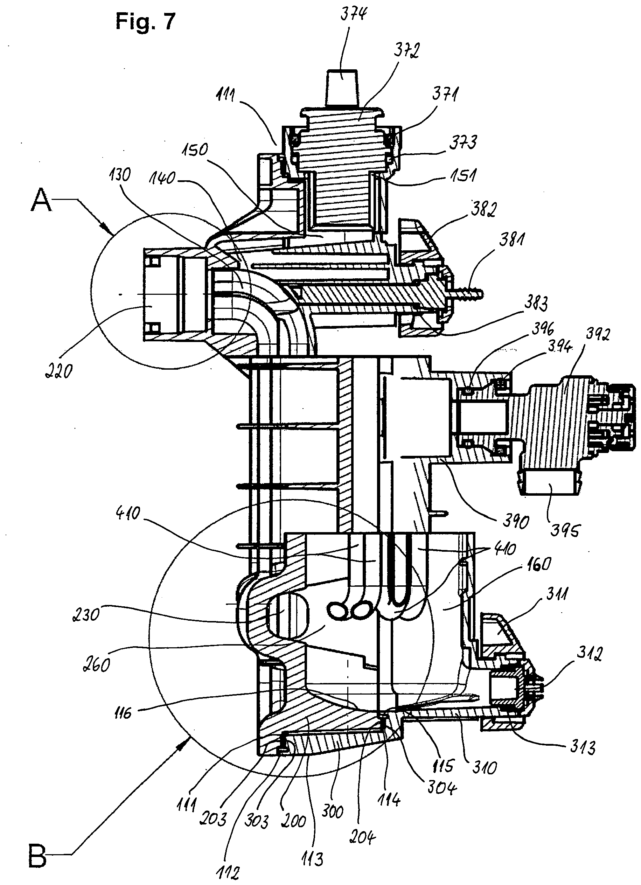

In Fig. 7 ist das Hydraulikmodul 100 mit einem ersten Schweißflansch 111 gezeigt. Der erste Schweißflansch ist gebildet durch eine Schweißfläche 203 der ersten Wand 200 und durch eine zweite Schweißfläche 303 der zweiten Wand 300. Im Bereich des ersten Schweißflansches ist eine erste Kavität 112 durch die Begrenzung mit einer ersten Fangrippe 113 gebildet. Ein zweiter Schweißflansch 114 ist zwischen einer dritten Schweißfläche 204 und einer vierten Schweißfläche 304 gebildet. Hier ist eine zweite Kavität 115 vorgesehen, in die z.B. Schweissgut verdrängt werden kann. Die zweite Kavität 115 ist durch eine zweite Fangrippe 116 begrenzt. Zwischen dem ersten Schweißflansch 111 und dem zweiten Schweißflansch 114 ist eine Mittenkavität 117 angeordnet, die auch zur Aufnahme von Schweissgut und zum Toleranzausgleich der ersten Wand 200 zur zweiten Wand 300 vorgesehen ist und um die Schweißamplitude, die beim Vibrationsschweißen in eine Richtung bei bis zu 1 mm liegen kann, sicherzustellen. Der Drainageflansch 310 ist mit einem O-Ring 313 abgedichtet. In der Kavität 160 ist wenigstens ein Rohrheizkörper 410 angeordnet.

Im Hydraulikmodul ist eine Schwimmerkammer 150 mit einer höchsten Stelle 151 angeordnet, hier kann Luft mit dem Automatikentlüfter 370 aus dem Hydraulikmodul 100 abgelassen werden. Die Schwimmerkammer 150 und die höchste Stelle 151 sind über eine Öffnung 140 mit dem Heizungsvorlauf 130 verbunden.

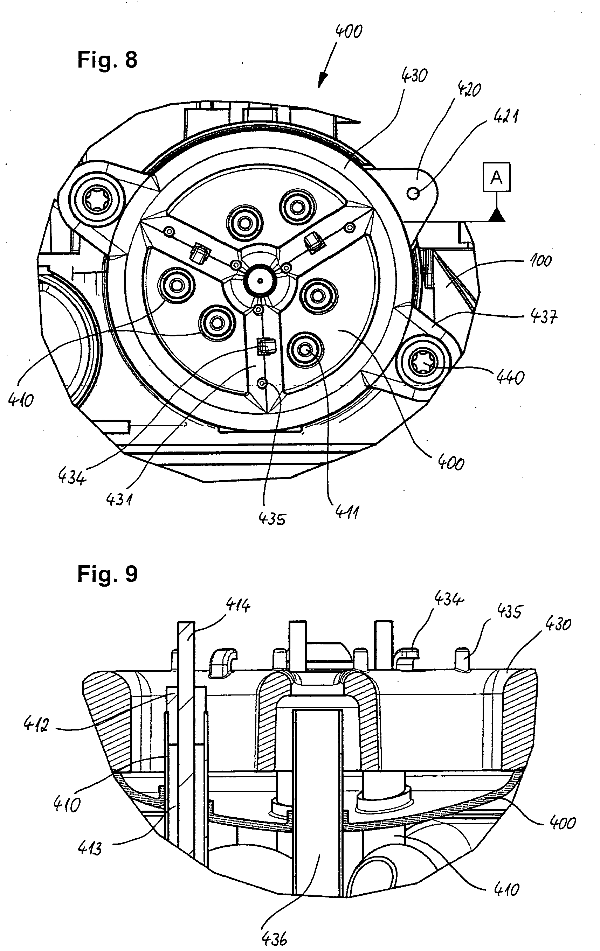

Der Heizflansch gemäß Fig. 8 weist mehrere Rohrheizkörper 410 auf, die einen Anschlussspaten 411 oder eine Schrauböse aufweisen. Der Befestigungsring 430, der Streben 431 aufweist, weist auf den Streben 431 im Ausführungsbeispiel wenigstens einen Leitungshaken 434 auf sowie wenigstens einen Leitungssteg 435. Mit dem Leitungshaken 434 und dem Leitungssteg 435 können insbesondere elektrische Anschlussleitungen oder Fühlerkapillare an den Streben 431 gehalten werden. Flügel 437 dienen der Befestigung des Befestigungsrings 430 am Hydraulikmodul 100, womit der Heizflansch 400 im Hydraulikmodul gehalten ist.

In Fig. 9 ist ein Schnitt durch den Heizflansch 400 gezeigt. Der gezeigte Rohrheizkörper 410 im Schnitt weist einen Heizkörperbolzen 414 auf, an dem die Anschlussspaten 411 befestigt werden können. Der Rohrheizkörper 410 ist innen mit einer MgO-Isolierung 413 ausgefüllt und mit einem Abschluss 412 versehen. An dem Heizflansch 400 ist ein Schutzrohr 436 angebracht, welches wasser- und druckdicht mit dem Heizflansch verbunden ist. Es ist zum Ringloch 432 geöffnet wodurch eine Fühlerbirne z.B. eines Temperatursensors durch das Ringloch 432 in das Schutzrohr 436 eingeführt werden kann. In vorteilhafter Weise ist an dem Heizflansch 400 noch ein Rasthaken oder eine ähnliche Verbindung zur Adaptierung und Fixierung einer Fühlerbirne vorgesehen.

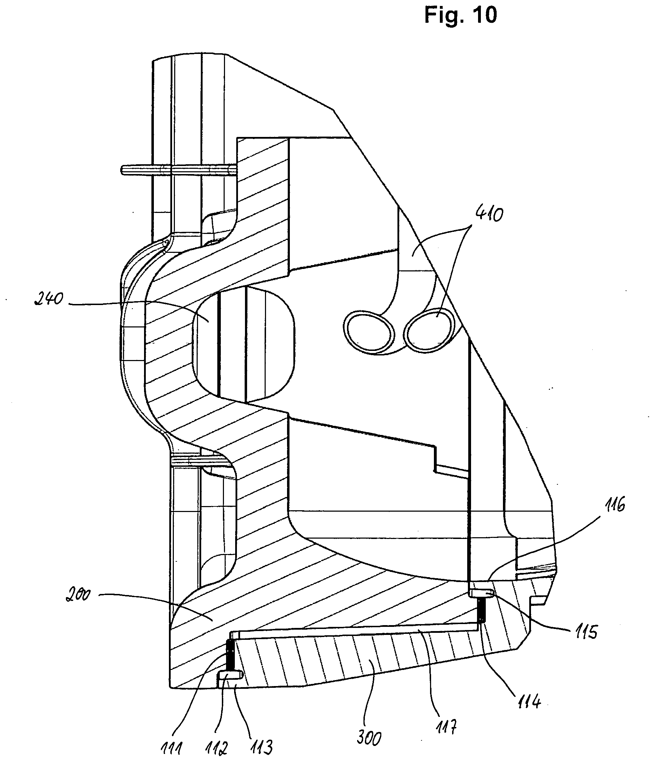

Der Leitungszulauf 240, der in Fig. 10 gezeigt ist, führt in die Kavität 160, in der die Rohrheizkörper 410 liegen. Weiterhin ist der erste Schweißflansch 111 sowie der zweite Schweißflansch 114 gezeigt.

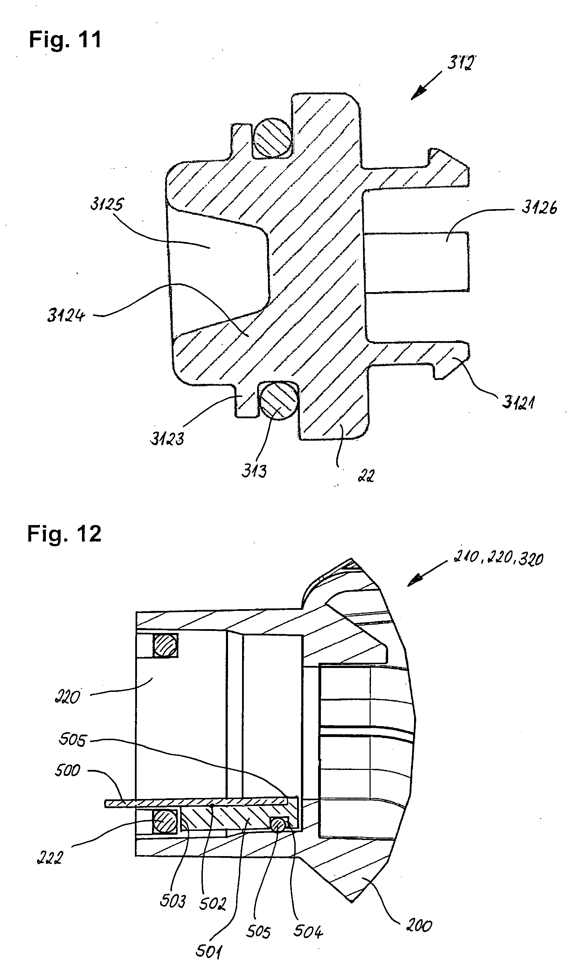

In Fig. 11 ist der Dichtstopfen 312 für den Drainageflansch dargestellt. Er weist einen Haken 3121 zum Verrasten auf. Der Dichtstopfen ist durch einen Ringdeckel 3122 gebildet, der einen Stegring 3123, einen Stumpfring 3124 sowie einen Hohlraum 3125 aufweist. Weiterhin ist ein Zapfen 3126 vorgesehen. Das ist der gleiche Rasthaken wie 3121, nur in einer anderen Ansicht. Der Stopfen hat insgesamt vier davon gleichmäßig über den Umfang verteilt. Die Abdichtung erfolgt im Ausführungsbeispiel mit einem vierten O-Ring 313.

Fig. 12 zeigt, wie ein Rohr 500, insbesondere Kupferrohr, in einem ersten Rücklaufanschluss 210, einem Vorlaufanschluss 220 und/oder einem zweiten Rücklaufanschluss 320 eingesetzt ist. Das Rohr 500 weist im Ausführungsbeispiel einen Messingfitting 501 auf, der mit einer Lötverbindung 502 am Rohr 500 befestigt ist. In eine Nut 504 ist ein fünfter O-Ring 505 zur Abdichtung eingelegt. Das Rohr 500, das ein Vorlauf- oder Rücklaufrohr einer Wärmepumpe sein kann, ist mit einem Sicherungsdraht 222 am ersten Rücklaufanschluss 320, am Vorlaufanschluss 220 oder am zweiten Rücklaufanschluss 320 angebracht und gesichert. Der Sicherungsdraht 222 ist in vorteilhafter Weise universell bei allen Anschlüssen und Zusatzbauteilen zur Sicherung verwendbar. Alternativ kann ein Befestigungshaken, eine Schraube oder ähnliches verwendet werden.

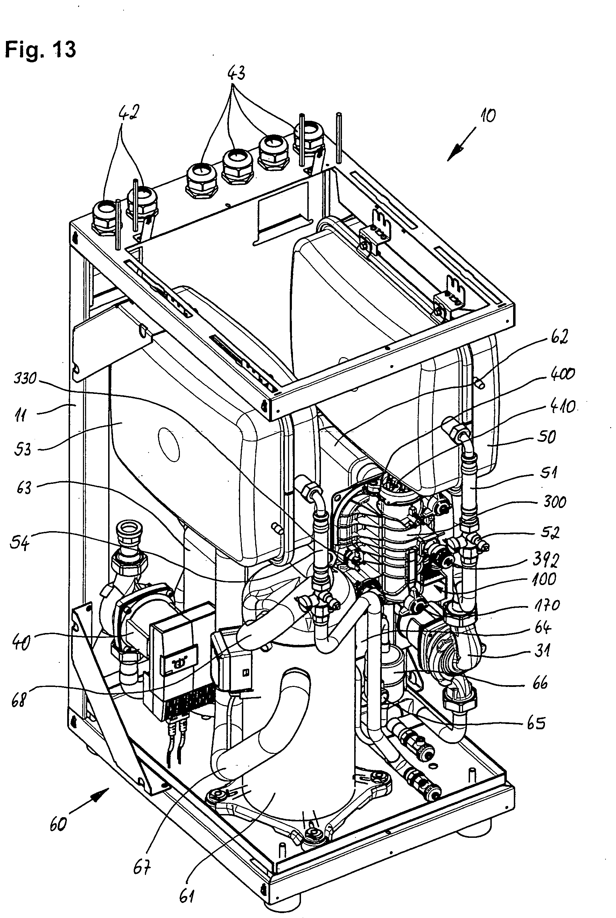

Fig. 13 zeigt eine Wärmepumpe 10 mit einem Rahmen 11. In den Rahmen 11 ist ein Kältemittelkreislauf 60 mit einem Verdichter 61, einem Verflüssiger 62, einem Verdampfer 63, einem Expansionsventil 64, einem Schauglas 65, einem Trockner 66, einer Ansaugleitung 67 und einer Heissgasleitung 68 gezeigt. Im oberen Teil des Rahmens sind ein Ausdehnungsbehälter 50 für die Heizung sowie ein Ausdehnungsbehälter 53 für die Wärmequelle (wie eine Bohrung mit Sole) vorgesehen. Der Ausdehnungsbehälter 50 für die Heizung ist mit einem ersten Schwingungsdämpfer 51 von der Wärmpumpe 10 gekoppelt. An dem ersten Schwingungsdämpfer 51 ist ein Kappenventil 52 angeschlossen. An den Ausdehnungsbehälter 53 der Wärmequelle ist ein zweiter Schwingungsdämpfer 54 angebracht. Das Hydraulikmodul 100 ist an einer nicht dargestellten Rücklaufleitung mit einem ersten Rücklaufanschluss 210 des Hydraulikmoduls 100 verbunden, und die Vorlaufleitung (nicht dargestellt) der Wärmepumpe ist mit einem Vorlaufanschluss 220 des Hydraulikmoduls 100 verbunden. Weiterhin weist die Wärmepumpe noch eine Vorlaufpumpe 40 für die Sole und eine Vorlaufpumpe 31 für die Heizung und das Warmwasser auf.

Das Hydraulikmodul 100 ist mit wenigstens einem Temperatursensor 71 ausgerüstet, welcher mit einer nicht dargestellten Regelung der Wärmepumpe verbindbar ist. Ebenfalls mit dem Regler verbunden ist der Ventilantrieb 332, mit dem die Wassermengen durch das Hydraulikmodul 100 gesteuert werden und/oder die Durchströmung der Heizung oder der Warmwasseranlage. Weiterhin ist der wenigstens eine Rohrheizkörper 410 des Heizflansches 400 des Hydraulikmoduls 100 mit einer Schalteinrichtung verbunden oder wird vom Regler gesteuert. Zum Anschluss einer nicht dargestellten Heizung und eines Warmwassersystems weist die Wärmepumpe 10 Leitungen 43 für Warmwasser und Heizung auf. Leitungen 42 sind für den Soleanschluss der Wärmequelle vorgesehen.

Bei einer Luft/Wasser-Wärmepumpe ist der Verdampfer von einem Luftstrom durchströmt, der Wärme an den Verdampfer durchfliessendes Kältemittel abgibt. Daher ist der Verdampfer einer Luftwärmepumpe meist in einem anderen Raum, wo die Luft als Wärmequelle strömt, angebracht. Im hier dargestellten Ausführungsbeispiel ist eine Sole/Wasser-Wärmepumpe dargestellt, bei der als Wärmequelle eine Sole, die meist Wärme aus dem Erdreich aufnimmt, vorgesehen ist. Die Sole durchströmt hier den im gleichen Raum angebrachten Verdampfer 63.

## Patentansprüche

1. Wärmepumpe mit einem Hydraulikmodul (100) sowie einem Kältemittelkreislauf mit einem Verdichter, einem Verflüssiger, einem Verdampfer und einem Expansionsventil,
wobei das Hydraulikmodul (100) in die Wärmepumpe (10) eingebaut ist, wobei ein Vorlaufanschluss (220) mit einer Vorlaufleitung der Wärmepumpe (10) und wenigstens ein erster Rücklaufanschluss (210) mit einer Rücklaufleitung der Wärmepumpe (10) zumindest fluidtechnisch in Verbindung stehen.
wobei das Hydraulikmodul ein Gehäuse, mit wenigstens dem Vorlaufanschluss (220), wenigstens dem ersten Rücklaufanschluss (210), durch das ein Fluid leitbar ist und einem Heizkörper (410) aufweist,
wobei das Gehäuse zur Fluidführung aus wenigstens einer ersten Wand (200) und einer zweiten aus Kunststoff spritzgegossenen Wand (300) gebildet ist, die mit einem Schweißverfahren miteinander verbunden sind,
die erste mit der zweiten Wand (200, 300) eine dauerhaft wasser- und druckdichte Kavität (160) zur Aufnahme des Heizkörpers (410) bildet, eine fluidleitende Verbindung der Kavität (160) mit dem Vorlaufanschluss (220) und dem ersten Rücklaufanschluss (210) besteht, ein 3/2-Wegeventil vorgesehen ist, mit dem eine Wärmenutzungsseite der Wärmepumpe zwischen Heizungsbetrieb und Warmwasserbereitung umgeschaltet werden kann,
wobei das Hydraulikmodul den ersten Rücklaufanschluss (210) und einen zweiten Rücklaufanschluss zum Anschluss jeweils einer Rücklaufleitung von der Heizung und der Warmwasseranlage aufweist,
wobei die Kavität (160) durch einen Heizflansch (400) wasserdicht und druckdicht verschlossen ist.

2. Wärmepumpe nach Anspruch 1,
**dadurch gekennzeichnet, dass** der Vorlaufanschluss (220) und/oder ein erster Rücklaufanschluss (210) in der ersten Wand (200) und/oder der zweiten Wand (300) angeordnet sind, und ein Leitungszulauf (230) von einer ersten Leitungswand (201) und einer dritten Leitungswand (301) und/oder ein Leitungsablauf (240) von einer zweiten Leitungswand (202) und einer vierten Leitungswand (302) gebildet ist.

3. Wärmepumpe nach einem der vorhergehenden Ansprüche,
**dadurch gekennzeichnet, dass** in der fluidleitenden Verbindung zwischen dem Vorlaufanschluss (220) und wenigstens dem ersten Rücklaufanschluss (210) und/oder dem zweiten Rücklaufanschluss (320) wenigstens ein weiteres Bauteil angeordnet ist, insbesondere eine Aufnahme (370, 330) ein Flansch (390), ein Führungsrohr (380), ein Drainageflansch (310) und/oder eine Sensoraufnahme (340) angeordnet sind.

4. Wärmepumpe nach dem vorhergehenden Anspruch,
**dadurch gekennzeichnet, dass** der Heizflansch (400) mit einem Befestigungsring (430) an der ersten Wand (200) und/oder der zweiten Wand (300) wasserdicht befestigt ist.

5. Wärmepumpe nach einem der vorhergehenden Ansprüche,
**dadurch gekennzeichnet, dass** das Hydraulikmodul eine Schwimmerkammer (150) für einen Automatikentlüfter (372) und die Schwimmerkammer eine höchste Stelle (151) aufweist, die dafür vorgesehen ist, oben im Gerät zu liegen, wenn das Gerät senkrecht montiert ist.

6. Wärmepumpe nach einem der vorhergehenden Ansprüche,
**dadurch gekennzeichnet, dass** zumindest die erste Wand (200) und/oder die zweite Wand (300) aus Kunststoff besteht, insbesondere aus PA66, SPS-GF30, PPE/PS-GF30, PA6T/6I-GF40 oder PEI-GF30.

7. Wärmepumpe nach Anspruch 6,
**dadurch gekennzeichnet, dass** die erste Wand (200) und/oder die zweite Wand (300) äußere Verstärkungen, insbesondere teilweise hohe Rippen (205, 206, 209) aufweisen, wobei insbesondere auf einer ersten Außenwand (260) und/oder einer zweiten Außenwand (360) mehrere Rippen (205, 206, 209), insbesondere sechs Rippen (205, 206, 209), auf einen Rippenring (207) zulaufen und andere Rippen (205, 206, 209), insbesondere weniger als sechs Rippen, in einem Rippenknoten (208) zusammenlaufen.

8. Wärmepumpe nach Anspruch 7,
**dadurch gekennzeichnet, dass** die Rippen (205, 206, 208, 209) in der Höhe variieren, insbesondere von ca. 1 mm - ca. 40 mm Höhe, und eine Dicke von ca. 0,3 - 5 mm, insbesondere ca. 1 mm aufweisen.

9. Wärmepumpe nach einem der vorhergehenden Ansprüche,
**dadurch gekennzeichnet, dass** die erste Wand (200) und die zweite Wand (300) miteinander verschweißt sind durch Vibrationsschweißen, Reibschweißen, Ultraschallschweißen oder Laserschweißen in einer Schweißfläche (110).

10. Wärmepumpe nach Anspruch 1,
**dadurch gekennzeichnet, dass** die Vorlaufleitung der Wärmepumpe (10) mit einem Verflüssigungswärmeaustauscher der Wärmepumpe (10) verbunden ist, und dass der erste Rücklaufanschluss (210) mit der Rücklaufleitung einer Heizung, und der zweite Rücklaufanschluss (320) mit der Rücklaufleitung eines Warmwassersystem verbunden ist.

11. Wärmepumpe nach Anspruch 10,
**dadurch gekennzeichnet, dass** die Vorlaufleitung (61) in den Vorlaufanschluss (220) des Hydraulikmoduls eingesteckt und/oder die Rücklaufleitung in den Rücklaufanschluss (210) eingesteckt ist, und mittels eines Dichtkörpers zwischen den Leitungen und den Anschlüssen (210, 220) eine wasserdichte Abdichtung erfolgt.

## Claims

1. Heat pump with a hydraulic module (100),
wherein the hydraulic module has a casing, with at least one flow connection (220), at least one first return connection (210) through which a fluid can be conducted, and a heating element (410),
**characterised**
**in that**
the casing for conducting fluid is formed by at least one first wall (200) and a second wall (300) which is injection moulded from plastic, which are joined together by means of a welding process,
the first wall forms with the second wall (200, 300) a cavity (160), which is permanently watertight and pressure-tight, for mounting the heating element (410), there is a fluid-conducting connection of the cavity (160) to the flow connection (220) and the first return connection (210), a 3/2-way valve is provided by means of which a heat consumption side of the building services appliance can be switched between heating operation and domestic hot water heating,
wherein the hydraulic module has the first return connection and a second return connection for connecting a return pipe from the heating and the domestic hot water system respectively,
wherein the cavity (160) is sealed to be watertight and pressure-tight by means of a heating flange (400).

2. Heat pump according to claim 1,
**characterised in that**
the flow connection (220) and/or the first return connection (210) are arranged in the first wall (200) and/or the second wall (300), and the pipe inflow (230) is formed by a first pipe wall (201) and a third pipe wall (301) and/or the pipe outflow (240) is formed by a second pipe wall (202) and a fourth pipe wall (302).

3. Heat pump according to any of the preceding claims,
**characterised in that**
in the fluid-conducting connection between the flow connection (220) and at least the first return connection (210) and/or the second return connection (320) at least one further component is arranged, in particular a mount (370, 330), a flange (390), a guide pipe (380), a drainage flange (310) and/or a sensor mount (340).

4. Heat pump according to the preceding claim,
**characterised in that**
the heating flange (400) is attached, in particular so as to be watertight, to a fastening ring (430) on the first wall (200) and/or the second wall (300).

5. Heat pump according to any of the preceding claims,
**characterised in that**
the hydraulic module has a float chamber (150) for an automatic air vent valve (372) and the float chamber has a highest point (151) which is intended to be positioned at the top in the appliance when the appliance is mounted vertically.

6. Heat pump according to any of the of the preceding claims,
**characterised in that**
at least the first wall (200) and/or the second wall (300) is made of plastic, in particular PA66, SPS-GF30, PPE/PS-GF30, PA6T/6I-GF40 or PEI-GF30.

7. Heat pump according to claim 6,
**characterised in that**
the first wall (200) and/or the second wall (300) have external reinforcements, in particular partially high ribs (205, 206, 209), wherein in particular on a first external wall (260) and/or a second external wall (360) a plurality of ribs (205, 206, 209), in particular six ribs (205, 206, 209), extend towards a rib ring (207) and other ribs (205, 206, 209), in particular less than six ribs, converge into a rib node (208).

8. Heat pump according to claim 7,
**characterised in that**
the ribs (205, 206, 208, 209) vary in height, in particular by approximately 1 mm - approximately 40 mm in height, and have a thickness of approximately 0.3 - 5 mm, in particular approximately 1 mm.

9. Heat pump according to any of the preceding claims,
**characterised in that**
the first wall (200) and the second wall (300) are welded together, in particular in a pressure-tight and watertight manner, by vibration welding, friction welding, ultrasonic welding or laser welding in a welding area (110).

10. Heat pump according to any of claims 1 to 9, also comprising
a refrigerant circuit, a compressor, a condenser, an evaporator and an expansion valve, wherein a hydraulic module (100) is installed in the heat pump (10), wherein a flow connection (220) is connected to a flow pipe of the heat pump (10) and at least one first return connection (210) is connected to a return pipe of the heat pump (10), at least in terms of fluid technology.

11. Heat pump according to claim 10 or 11,
**characterised in that**
the flow pipe (61) is inserted into the flow connection (220) of the hydraulic module and/or the return pipe is inserted into the return connection (210), and in particular by means of a sealing element a watertight seal is formed between the pipes and the connections (210, 220).

## Revendications

1. Pompe à chaleur avec un module hydraulique (100),
le module hydraulique présentant un boîtier, avec au moins un raccord de départ (220), au moins un premier raccord de retour (210) par lequel un fluide peut s'écouler, et un corps de chauffe (410),
**caractérisé en ce que**
le boîtier pour le guidage du fluide est formé au moins par une première paroi (200) et par une deuxième paroi (300) en matière synthétique moulée par injection qui sont reliées l'une à l'autre par un procédé de soudage,
la première formant avec la deuxième paroi (200, 300) une cavité (160) durablement étanche à l'eau et à la pression pour loger le corps de chauffe (410), une liaison à guidage de fluide existant de la cavité (160) au raccord de départ (220) et au premier raccord de retour (210), une soupape à 3/2 voies étant prévue avec laquelle un côté d'utilisation de la chaleur de l'appareil technique domestique peut être permutée entre le mode chauffage et la préparation d'eau chaude,
le module hydraulique présentant le premier raccord de retour et un deuxième raccord de retour pour raccorder respectivement une conduite de retour du chauffage et de l'installation d'eau chaude,
**caractérisé en ce que** la cavité (160) est fermée par une bride électrique (400) en étant étanche à l'eau et à la pression.

2. Pompe à chaleur selon la revendication 1,
**caractérisée en ce que**
le raccord de départ (220) et/ou le premier raccord de retour (210) sont agencés dans la première paroi (200) et/ou dans la deuxième paroi (300), et **en ce que** l'amenée de la conduite (230) est formée par une première paroi de conduite (201) et une troisième paroi de conduite (301) et/ou la sortie de la conduite (240) est formée par une deuxième paroi de conduite (202) et par une quatrième paroi de conduite (302).

3. Pompe à chaleur selon l'une quelconque des revendications précédentes,
**caractérisée en ce que**
au moins un autre composant est agencé dans la liaison à guidage de fluide entre le raccord de départ (220) et au moins le premier raccord de retour (210) et/ou le deuxième raccord de retour (320), notamment un logement (370, 330), une bride (390), un tube de guidage (380), une bride de drainage (310) et/ou un logement pour capteur (340).

4. Pompe à chaleur selon la revendication précédente,
**caractérisée en ce que**
la bride électrique (400) est fixée à la première paroi (200) et/ou à la deuxième paroi (300) de manière particulièrement étanche à l'eau par un anneau de fixation (430).

5. Pompe à chaleur selon l'une quelconque des revendications précédentes,
**caractérisée en ce que**
le module hydraulique présente une chambre de flotteur (150) pour un ventilateur automatique (372) et **en ce que** la chambre de flotteur présente un point le plus élevé (151) prévu pour se situer en haut de l'appareil lorsque l'appareil est monté à la verticale.

6. Pompe à chaleur selon l'une quelconque des revendications précédentes,
**caractérisée en ce que**
au moins la première paroi (200) et/ou la deuxième paroi (300) sont composées de matière synthétique, en particulier de PA66, SPS-GF30, PPE/PS-GF30, PA6T/61-GF40 ou de PEI-GF30.

7. Pompe à chaleur selon la revendication 6,
**caractérisée en ce que**
la première paroi (200) et/ou la deuxième paroi (300) présentent des renforts extérieurs, notamment de nervures en partie hautes (205, 206, 209), plusieurs nervures (205, 206, 209), notamment six nervures (205, 206, 209) convergeant vers un anneau de nervures (207) en particulier sur une première paroi extérieure (260) et/ou une deuxième paroi extérieure (360), et d'autres nervures (205, 206, 209), notamment moins de six nervures, convergeant en un nœud de nervures (208).

8. Pompe à chaleur selon la revendication 7,
**caractérisée en ce que**
les nervures (205, 206, 208, 209) varient en hauteur, notamment d'env. 1 mm à env. 40 mm de hauteur et présentent une épaisseur d'env. 0,3 - 5 mm, en particulier d'env. 1 mm.

9. Pompe à chaleur selon l'une quelconque des revendications précédentes,
**caractérisée en ce que**
la première paroi (200) et la deuxième paroi (300) sont soudées ensemble, notamment dans une surface soudée (110) étanche à l'eau et à la pression par le biais d'un soudage par vibration, d'un soudage par friction, d'un soudage par ultrasons ou d'un soudage laser.

10. Pompe à chaleur selon l'une quelconque des revendications 1 à 9, en outre avec un circuit de fluide frigorigène, avec un compresseur, un condenseur, un évaporateur et un détendeur,
un module hydraulique (100) étant installé dans la pompe à chaleur (10), un raccord de départ (220) se trouvant en liaison au moins hydraulique avec une conduite de départ de la pompe à chaleur (10) et au moins un premier raccord de retour (210) se trouvant en liaison au moins hydraulique avec une conduite de retour de la pompe à chaleur (10).

11. Pompe à chaleur selon la revendication 10 ou 11,
**caractérisée en ce que**
la conduite de départ (61) est enfichée dans le raccord de départ (220) du module hydraulique et/ou la conduite de retour est enfichée dans le raccord de retour (210), et une étanchéité à l'eau est réalisée entre les conduites et les raccords (210, 220) notamment au moyen d'un corps d'étanchéité.
